# EUROPEAN PATENT SPECIFICATION

(11) **EP 3 343 006 B1**
(45) Date of publication and mention of the grant of the patent: **28.07.2021**
(21) Application number: 17211100.7
(22) Date of filing: 29.12.2017
(51) Int. Cl.: F02D 41/00, F02D 19/02, F02D 29/06, F02D 41/14, F02D 31/00

(54) **METHOD OF CONTROLLING ENGINE**
VERFAHREN ZUR STEUERUNG EINES MOTORS
PROCÉDÉ DE COMMANDE DE MOTEUR

(30) Priority: 03.01.2017 KR 20170000922; 03.01.2017 KR 20170000923
(43) Date of publication of application: 04.07.2018
(73) Proprietor: LG Electronics Inc., Yeongdeungpo-gu Seoul, 07336 (KR)
(72) Inventor: JANG, Heejoong, 08592 Seoul (KR)
(74) Representative: Vossius & Partner Patentanwälte Rechtsanwälte mbB

(56) References cited:
- JP-A- 2001 059 441
- JP-A- 2006 009 603
- US-A1- 2013 131 889
- US-B1- 6 701 275

## Description

### BACKGROUND OF THE INVENTION

### Field of the Invention

The present invention relates to an engine generation system, and more particularly, to a method of controlling an engine, which is capable of efficiently controlling the engine during power generation, and an engine generation system using the same.

### Discussion of the Related Art

A cogeneration system is a system that produces electric power using a generator by operating an engine that uses gas fuel, produces hot water using heat generated by the engine, and supplies the electric power or the hot water to equipment consuming the same.

This cogeneration system is connected with an air-conditioning system so as to supply electric power, heat or hot water to the same.

The engine serves to rotate the generator so that the generator produces electric power. The electric power produced by the generator is converted into commercial power by a power conversion system, which changes the current, voltage and frequency of the power produced by the generator, and the commercial power is supplied to power consumers, such as buildings, air-conditioning systems, etc.

The engine is a device that is generally operated on a 4-stroke cycle, including intake, compression, combustion, and exhaust strokes. Even when the engine is stably driven, the engine is not always driven at a constant number of revolutions per minute (RPM) due to incomplete combustion or the like, and thus hunting of the engine RPM may occur.

In the case of a cogeneration system, the load that is applied to the engine gradually varies due to constant voltage control by a power conversion system, which may increase hunting of the engine RPM.

With respect to a load that is not constant but continually and irregularly varies, the RPM of the engine decreases when the load increases, and the RPM of the engine increases when the load decreases. In tracking a target engine RPM, the RPM of the engine exhibits hysteresis due to rotational inertia, which may cause a problem in which an engine RPM error continually increases or decreases.

For example, if a load is applied when the engine RPM falls, the engine RPM may further fall, and if the load decreases when the engine RPM rises, the engine RPM may further rise. In this way, hunting of the engine RPM may be further increased by variation in the load.

Because the engine is basically driven by combustion operation, RPM hunting (ripple) occurs even when the engine is controlled to be driven at a constant speed.

Therefore, when the load varies, it is impossible to immediately cope with variation in the load, which may cause a problem in which the engine RPM is sharply changed.

For example, when the load increases in the state in which the load and the engine RPM are constant, the engine RPM may fall due to sudden increase in the load in the process of correcting the engine to a target RPM. Further, when the load decreases in the state in which the output of the engine is maintained constant, the engine RPM may rise due to excessive increase in output attributable to a decrease in the load.

In the engine generation system that is applicable to the cogeneration system, because the output amount of power generation varies depending on consumers' requests, many factors that cause variation in the load may be present.

Therefore, there is a need for a method of controlling hunting of the engine RPM, which may occur in the engine generation system. In addition, there is a need for a method of stably controlling the engine.
Patent document JP 2006 009603 A relates to a control apparatus that regulates the opening of the fuel valve corresponding to generated engine power. The fuel valve controls the flow rate of fuel gas passing in the fuel gas channel.
Further patent document US 2013/131889 A1 relates to a vehicle controller including computation of a feedback amount based on a filtered input signal.

### SUMMARY OF THE INVENTION

Accordingly, the present invention is directed to a method of controlling an engine and an engine generation system using the same that substantially obviate one or more problems due to limitations and disadvantages of the related art.

The invention is specified in the claims.

An object of the present invention is to provide a method of controlling an engine when producing electric power using an engine generation system, which is capable of minimizing variation in the RPM of the engine, and an engine generation system using the same.

Another object of the present invention is to provide a method of controlling an engine when producing electric power using an engine generation system, which is capable of stably controlling the engine when the RPM of the engine varies due to variation in a load that occurs when the output amount of power generation varies, and an engine generation system using the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve the object and other advantages and in accordance with the purpose of the invention, as embodied and broadly described herein, a method of controlling an engine for driving a generator in an engine generation system includes performing engine revolution-per-minute (RPM) tracking control so that the engine is driven at a target engine RPM, driving the engine according to a control cycle of electronic throttle control (ETC) set in a table in accordance with a corresponding engine RPM when a load is in a fixed state, determining a range of variation when variation in an RPM of the engine occurs, adjusting the control cycle of ETC according to the range of variation, and driving the engine according to the adjusted control cycle of ETC.

The adjusting the control cycle of ETC may include lengthening the control cycle of ETC by a first time period when the range of variation is a first range, and lengthening the control cycle of ETC by a second time period when the range of variation is a second range, wherein the second range may be wider than the first range, and the second time period may be shorter than the first time period.

The determining the range of variation includes determining a manifold absolute pressure (MAP) together with the range of variation in the RPM of the engine.

The control cycle of ETC may be lengthened by the first time period when the range of variation is the first range and a range of variation in the MAP is within 5 hPa.

The engine may be driven according to the control cycle of ETC set in the table when the range of variation is a third range, the third range being wider than the second range.

The control cycle of ETC may be shortened when the range of variation is a fourth range, the fourth range being wider than the third range.

The control cycle of ETC may be adjusted in the range from 700 ms to 1200 ms.

The control cycle of ETC may be adjusted at intervals of 100 ms.

When variation in the RPM of the engine occurs due to variation in a load applied to the engine in response to variation in an amount of power generation of the generator, the adjusting the control cycle of ETC may be performed such that a difference between variation in the RPM of the engine due to variation in the load and variation in the RPM of the engine for engine RPM tracking is within a predetermined range and such that a direction in which the RPM of the engine varies for the engine RPM tracking is opposite a direction in which the RPM of the engine varies due to variation in the load.

The adjusting the control cycle of ETC may be performed according to a variation amount of the load and a variation cycle of the load when the load varies.

The variation amount of the load may be a value derived by adding a decreased amount of the RPM of the engine to an increased amount of a manifold absolute pressure (MAP).

In another aspect of the present invention, an engine generation system includes a generator, an engine connected to a driving shaft of the generator to drive the generator, and a controller for controlling the engine, wherein the controller performs engine revolution-per-minute (RPM) tracking control so that the engine is driven at a target engine RPM, drives the engine according to a control cycle of electronic throttle control (ETC), set in a table in accordance with a corresponding engine RPM, in a no-load state, determines a range of variation in an RPM of the engine, adjusts the control cycle of ETC according to the range of variation, and drives the engine according to the adjusted control cycle of ETC.

The control cycle of ETC may be adjusted in the range from 700 ms to 1200 ms.

When variation in the RPM of the engine occurs due to variation in a load applied to the engine in response to variation in an amount of power generation of the generator, the controller may adjust the control cycle of ETC such that a difference between variation in the RPM of the engine due to variation in the load and variation in the RPM of the engine for engine RPM tracking is within a predetermined range and such that a direction in which the RPM of the engine varies for the engine RPM tracking is opposite a direction in which the RPM of the engine varies due to variation in the load.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a conceptual view schematically illustrating an exemplary cogeneration system, to which the present invention is applicable;
FIG. 2 is a graph showing an engine RPM when the engine is driven in the state in which a control cycle of ETC is fixed to 1 second;
FIG. 3 is an ETC control cycle table according to an embodiment of the present invention;
FIG. 4 is a flowchart showing a method of controlling the engine of an engine generation system according to an embodiment of the present invention;
FIG. 5 is a graph showing a process of driving the engine while changing the control cycle of ETC depending on the engine RPM according to an embodiment of the present invention;
FIG. 6 is a graph schematically showing the engine RPM when the engine is driven based on the variable control cycle of ETC applied thereto according to an embodiment of the present invention;
FIG. 7 is a table showing an error rate of the engine RPM in accordance with variation in a load when the embodiment of the present invention is applied;
FIGs. 8, 9 and 10 are graphs showing target RPM tracking performance when the values of the load are 10 kW, 20 kW and 30 kW, respectively;
FIG. 11 is a graph showing variation in the engine RPM due to variation in the load in the engine generation system;
FIG. 12 is a view schematically showing a method of controlling the engine of the engine generation system according to another embodiment of the present invention;
FIG. 13 is a graph schematically showing the method of controlling the engine of the engine generation system in accordance with an increase in the load according to the other embodiment of the present invention;
FIG. 14 is a graph schematically showing the method of controlling the engine of the engine generation system in accordance with a decrease in the load according to the other embodiment of the present invention;
FIG. 15 is a flowchart showing the method of controlling the engine of the engine generation system according to the other embodiment of the present invention;
FIG. 16 is a flowchart showing a process of controlling a control cycle of ETC according to the other embodiment of the present invention; and
FIG. 17 is a block diagram schematically showing essential parts of the engine generation system to which the present invention is applicable.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Exemplary embodiments of the present invention will be described in detail. However, the present invention is not restricted to the embodiments, and includes variations, equivalents, and substitutions of technical configurations of the invention disclosed in the appended claims.

It will also be understood that when an element such as a layer, a region, or a substrate is referred to as being "on" another element, it can be directly on the other element, or intervening elements may also be present.

It will be understood that, although the terms "first", "second", etc., may be used herein to describe various elements, components, regions, layers and/or sections, these elements, components, regions, layers and/or sections should not be construed as being limited by these terms.

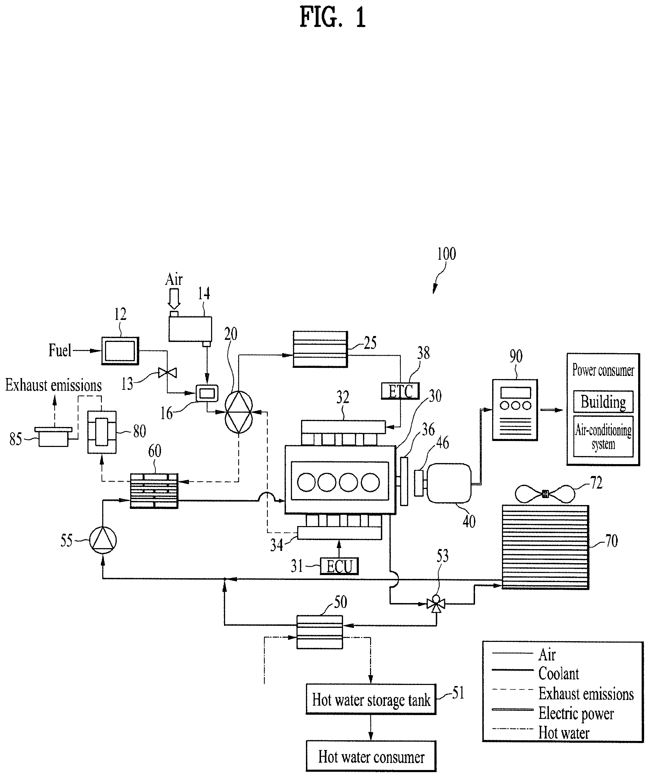

FIG. 1 is a conceptual view schematically illustrating an exemplary cogeneration system, to which the present invention is applicable.

A cogeneration system 100 is a system that produces electric power using a generator by operating an engine that uses gas fuel, produces hot water using heat generated by the engine, and supplies the electric power or the hot water to consumers.

This cogeneration system 100 may be connected with an air-conditioning system so as to supply electric power, heat or hot water to the same.

The gas fuel may be supplied while an outlet pressure thereof is maintained constant all of the time by a zero governor 12, regardless of the configuration of an inlet port or a change in flow rate. The zero governor 12 serves to enable the engine to maintain a stable outlet pressure over a wide range, and also serves to maintain the pressure of the gas fuel, which is supplied to the engine, substantially constant so as to be equivalent to atmospheric pressure. The zero governor 12 may include two solenoid valves to cut off the supply of the fuel.

Air may be filtered and converted into clean air by an air cleaner 14 and may then be supplied. The air cleaner 14 serves to filter the external air, which is to be supplied to the engine, using a filter in order to prevent the introduction of dust, water mist, and oil mist.

The gas fuel and the air, which are supplied in the above-described way, may be mixed and converted into a fuel-air mixture, the fuel-to-air ratio of which is constant, by a mixer 16, and the fuel-air mixture may be sucked into the engine.

A fuel valve 13 is provided at the inlet of the mixer 16 in order to control the supplied amount of gas fuel, which is to be mixed with air. The larger the supplied amount of gas fuel, the higher the fuel-to-air ratio of the fuel-air mixture.

A turbocharger 20 may compress the fuel-air mixture to a high-temperature and high-pressure state. The turbocharger 20 is a device that rotates a turbine using the force of exhaust emissions, compresses the sucked air using the rotational force, and supplies the compressed air to the cylinder of the engine, thereby increasing the output thereof.

The term "turbocharger" is a portmanteau word of the term "turbine" and the term "supercharger". The turbocharger 20 includes a turbine and an air compressor, which is directly connected to the turbine. This turbocharger 20 rotates the turbine wheel using the energy of exhaust emissions, compresses the sucked air using the air compressor, and supplies the compressed air to the cylinder.

The turbocharger 20 is configured such that the turbine wheel having blades and the impeller of the air compressor are connected to a single shaft and are enveloped by respective housings. The turbocharger 20 may be disposed near the exhaust manifold of the engine.

The fuel-air mixture is compressed by the turbocharger 20 and the temperature thereof increases. Therefore, the compressed fuel-air mixture is cooled by an intercooler 25, and is then supplied to the engine 30 via an intake manifold 32. The intercooler 25 serves to increase the density of the fuel-air mixture by cooling the same, thereby increasing the absolute amount of the fuel-air mixture that is introduced into the engine and consequently improving the engine output.

The intercooler 25 may include an air-cooling-type heat-exchange path for cooling the fuel-air mixture using air or a water-cooling-type heat-exchange path for cooling the fuel-air mixture using water. The water-cooling-type intercooler may use coolant as a medium, and may include a separate heat exchanger and a separate pump in order to dissipate heat obtained from the compressed fuel-air mixture to the outside.

A throttle valve 38 may be provided between the intercooler 25 and the intake manifold 32 in order to control the amount of fuel-air mixture that is introduced into the engine 30. An electronic throttle control valve (ETC valve) may be used as the throttle valve.

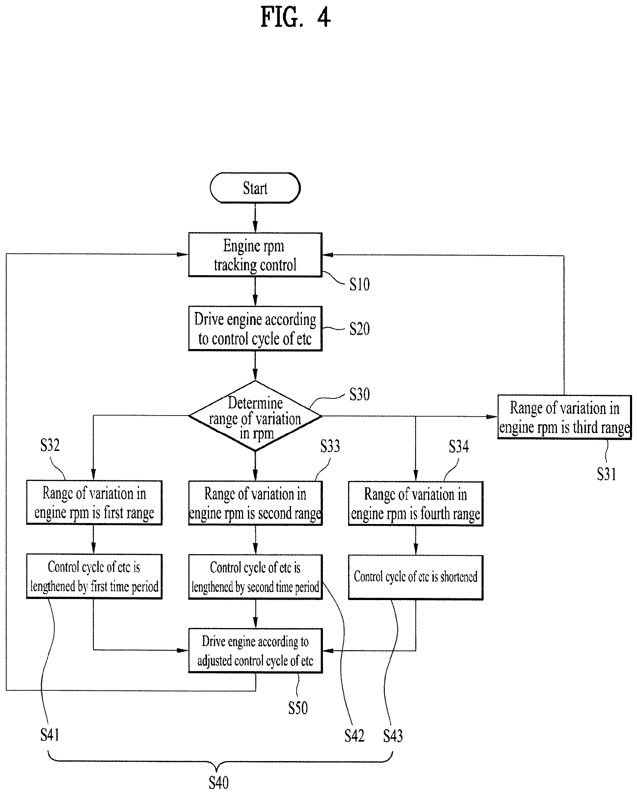

In addition, an engine control unit (ECU) 31 may be provided in order to control various control parameters related to control of the engine. For example, the ETC valve 38 and the control cycle of the ETC valve 38 may be controlled by the ECU 31. This ECU 31 may be controlled by a main controller (refer to FIG. 4), which controls the overall operation of the engine generation system.

The engine 30 may be an internal combustion engine that is operated on a 4-stroke cycle, including intake, compression, combustion, and exhaust strokes, using the fuel-air mixture introduced thereinto via the intake manifold 32.

Exhaust emissions generated by the operation of the engine 30 may be discharged through the exhaust manifold 34 and, at the same time, may rotate the impeller of the turbocharger 20.

The engine 30 rotates the generator 40 so that the generator 40 produces electric power. To this end, a pulley 36 provided at an end of the rotary shaft of the engine 30 and a pulley 46 provided at an end of the rotary shaft of the generator 40 may be connected to each other via a belt.

A ratio of the number of revolutions per minute of the pulley 36 of the engine 30 to the number of revolutions per minute of the pulley 46 of the generator 40 may be set to be about 1:3. That is, while the rotary shaft of the engine 30 rotates once, the rotary shaft of the generator 40 may rotate about three times.

The electric power produced by the generator 40 may be converted into commercial power by a power conversion system 90, which changes the current, voltage and frequency of the power produced by the generator, and the commercial power may be supplied to power consumers, such as buildings, air-conditioning systems, etc.

Because the engine 30 is operated by combustion of gas, a great amount of heat is generated. Therefore, configuration is made such that coolant is circulated to absorb the high-temperature heat generated by the engine through heat exchange.

In a vehicle, a radiator is mounted in a coolant circulation passage, whereby all of the waste heat from the engine is discarded. However, in the cogeneration system 100, heat from the engine may be absorbed into the coolant and may be used to produce hot water.

To this end, a hot water heat exchanger 50 is provided in the coolant circulation passage so that the coolant exchanges heat with water, which is supplied separately from the coolant, and consequently the water receives heat from the high-temperature coolant.

The hot water, which is generated by the hot water heat exchanger 50, may be stored in a hot water storage tank 51, and the hot water stored in the hot water storage tank 51 may be supplied to hot water consumers, such as buildings, etc.

When the hot water consumers do not use the hot water, water is not supplied to the hot water heat exchanger 50, which may cause an increase in the temperature of the coolant. To prevent this problem, a separate radiator 70 may be mounted in order to dissipate unnecessary heat from the coolant to the outside.

The radiator 70 dissipates heat in a manner such that the high-temperature coolant exchanges heat with air through a plurality of fins. A heat-dissipating fan 72 may be provided in order to promote the heat dissipation.

A flow passage of the coolant flowing out of the engine 30 may be bifurcated into a flow passage connected to the hot water heat exchanger 50 and a flow passage connected to the radiator 70, and a three-way valve 53 may be mounted at the bifurcation point in order to control the direction in which the coolant flows in accordance with the circumstances. The three-way valve 53 may allow the coolant to be supplied only to the hot water heat exchanger 50 or only to the radiator 70, or may distribute the coolant to the hot water heat exchanger 50 and the radiator 70 in a certain proportion as needed.

The coolant, which has sequentially passed through the three-way valve 53 and the radiator 70 and from which heat has been dissipated by the radiator 70, and the coolant, which has sequentially passed through the three-way valve 53 and the hot water heat exchanger 50, may meet and may then be introduced into the engine 30.

In addition, a coolant pump 55 may be mounted in the coolant circulation passage in order to control the flow speed of the coolant. The coolant pump 55 may be mounted at a position in the coolant circulation passage between a point downstream of the hot water heat exchanger 50 and the radiator 70 and a point upstream of the engine 30.

The exhaust emissions discharged through the exhaust manifold 34 of the engine 30 may be used to operate the above-described turbocharger 20. An exhaust emission heat exchanger 60 may be provided in order to recover waste heat from the exhaust emissions.

The exhaust emission heat exchanger 60 may be mounted at a position in the coolant circulation passage between a point downstream of the coolant pump 55 and a point upstream of the engine 30. The exhaust emission heat exchanger 60 may be configured such that the exhaust emissions discharged through the turbocharger 20 and the coolant exchange heat with each other. The waste heat from the exhaust emissions may be recovered through the exhaust emission heat exchanger 60.

While passing through the exhaust emission heat exchanger 60, the coolant may be heated to a certain extent, i.e. to a warm state, and may then be introduced into the engine 30. In this case, the coolant may also cool the engine 30 sufficiently.

The exhaust emissions, which have passed through the exhaust emission heat exchanger 60 and from which heat has been dissipated, may pass through a muffler 80. The muffler 80 serves to reduce engine exhaust noise.

The exhaust emissions, which have passed through the muffler 80, may pass through a drain filter 85 and may then be discharged outside. The drain filter 85 may be filled with a purification stone in order to purify condensed water generated in the muffler 80 and an exhaust emission line, thereby purifying and neutralizing acidic condensed water and subsequently discharging the same to the outside.

The engine 30, which is driven for cogeneration, is a device that is generally operated on a 4-stroke cycle, including intake, compression, combustion, and exhaust strokes. Even when the engine is stably driven, the engine is not always driven at the constant number of revolutions per minute (RPM) due to incomplete combustion or the like, and thus hunting of the engine RPM may occur.

In the engine generation system, a load that is applied to the engine 30 gradually varies due to constant voltage control of the power conversion system 90, which may increase hunting of the engine 30.

With respect to a load that is not constant but continually and irregularly varies, the RPM of the engine decreases when the load increases, and the RPM of the engine increases when the load decreases. In tracking a target engine RPM, the RPM of the engine exhibits hysteresis due to rotational inertia, which may cause a problem in which an engine RPM error continually increases or decreases.

For example, if the load is applied when the engine RPM falls, the engine RPM may further fall, and if the load decreases when the engine RPM rises, the engine RPM may further rise. In this way, hunting of the engine RPM may be further increased by variation in the load.

One of the most influential factors that contribute to control of the RPM of the engine 30 is a control cycle of electronic throttle control (ETC) or an electronic throttle control valve. According to a conventional control method that has been used to date, the control cycle of ETC is fixed to 1 second in all circumstances.

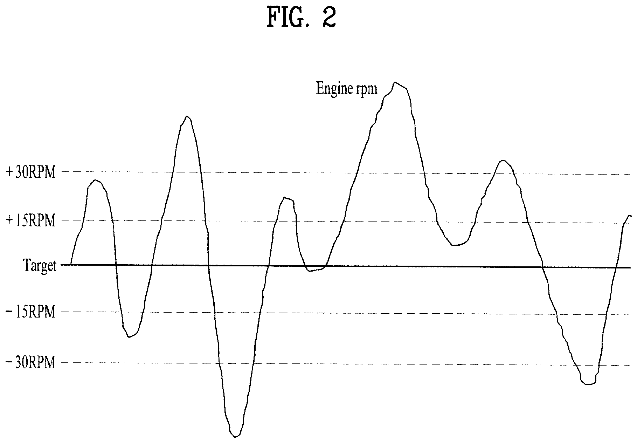

FIG. 2 is a graph showing the engine RPM when the engine is driven in the state in which the control cycle of ETC is fixed to 1 second.

The present invention provides a control method and system capable of minimizing variation in the RPM of the engine by stabilizing ETC, thereby alleviating hunting of the engine RPM.

The target RPM tracking performance of the engine may be enhanced by changing the control cycle of ETC in accordance with the engine RPM and variation in the load, and consequently the engine may rapidly track the target engine RPM.

The control cycles of ETC for the respective engine RPM regions, which are divided at intervals of 200 RPM, are set in a table. The optimum position in the table with respect to the current state of the engine may be determined, and then the control cycle of ETC in the table that corresponds to the determined optimum position may be applied. A detailed description thereof will be made later.

Through this application of the variable control cycle of ETC, when variation in the load occurs, the RPM tracking performance of the engine may be enhanced, and sudden variation in the RPM of the engine may be prevented.

The control cycle of ETC may be variably applied on the basis of variation in the RPM of the engine and variation in the load.

In addition, when the engine RPM is in a stabilized section within a predetermined range, the control cycle of ETC may be lengthened so that the engine is maintained in the stabilized state.

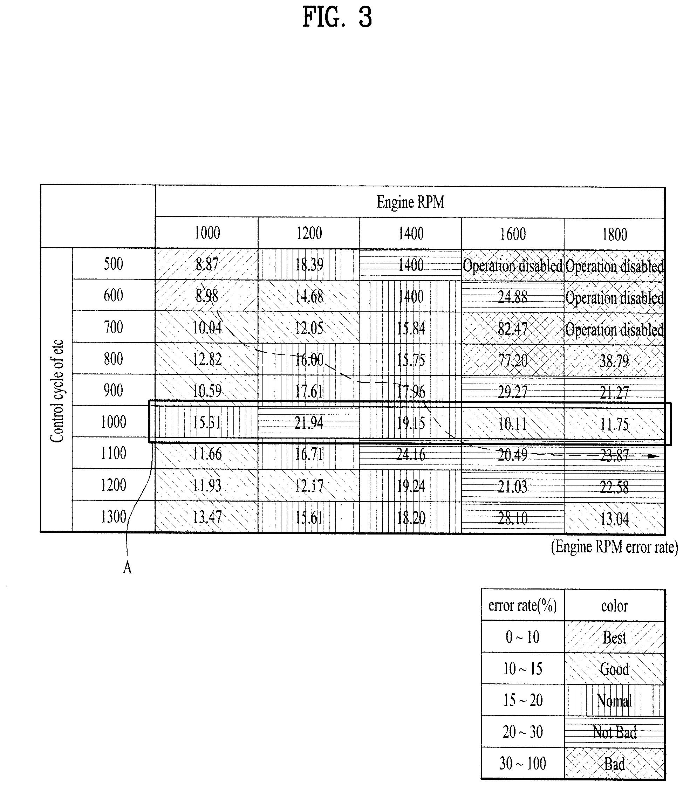

FIG. 3 is an ETC control cycle table according to an embodiment of the present invention.

According to the present invention, the control cycles of ETC for the respective engine RPM regions, which are divided at intervals of 200 RPM, are set in the table. The optimum position in the table with respect to the current RPM of the engine may be determined, and then the control cycle of ETC in the table that corresponds to the determined optimum position may be set to be a default.

Referring to FIG. 3, the control cycle of ETC may be controlled to be shortened at a relatively low RPM, and may be controlled to be lengthened at a relatively high RPM. In this case, it is possible to set a stable region, in which the engine RPM tracking and the target engine RPM / the current engine RPM error rate are the lowest. Based on this, a basic control cycle of ETC in accordance with the engine driving region may be set.

In the case of a typical emergency generator, the engine is driven in the constant region. Thus, the control cycle of ETC is identically applied without any variation.

However, in the case of a cogeneration system, the amount of power generation generally varies. Therefore, if the control cycle of ETC is identically applied without variation, there may occur a large difference in the target RPM tracking in accordance with the respective engine RPMs and the respective loads.

To solve this problem, the ETC control cycle table for enhancing the target RPM tracking in accordance with the corresponding load and RPM may be established, as shown in FIG. 3, such that the fixed load of 10 kW is applied to the engine, the control cycle of ETC is varied at intervals of 100 ms, and the engine RPM is varied at intervals of 200 RPM.

The above table may be a table that is established with respect to a fixed load. Further, as mentioned above, the table in FIG. 3 may be a table in which the control cycle of ETC, which minimizes an RPM error rate with respect to a corresponding engine RPM, is set.

The values of the control cycle of ETC for minimizing an RPM error rate may be set differently for respective engine RPMs.

For example, as shown in FIG. 3, when the engine RPM is 1000 RPM, the control cycle of ETC that exhibits the minimum RPM error rate (8.87) may be 500 ms.

Further, when the engine RPM is 1200 RPM, the control cycle of ETC that exhibits the minimum RPM error rate (12.05) may be 700 ms, and when the engine RPM is 1400 RPM, the control cycle of ETC that exhibits the minimum RPM error rate (15.75) may be 800 ms.

Furthermore, when the engine RPM is 1600 RPM, the control cycle of ETC that exhibits the minimum RPM error rate (10.11) may be 1000 ms, and when the engine RPM is 1800 RPM, the control cycle of ETC that exhibits the minimum RPM error rate (11.75) may be 1000 ms.

As shown in FIG. 3, the control cycle of ETC may be adjusted at intervals of 100 ms.

FIG. 4 is a flowchart showing a method of controlling the engine of the engine generation system according to an embodiment of the present invention.

First, a step of performing engine RPM tracking control may be performed so that the engine is driven at a target engine RPM (S10).

The engine may not always be driven at a constant RPM. In some cases, the engine may not be driven at a target RPM in accordance with variation in the load, such as the generator. In order to prevent this problem, control for driving the engine to a target RPM may be performed, and this control is referred to as engine RPM tracking control.

Subsequently, the engine is driven according to the control cycle of ETC, which is set in the table in accordance with each engine RPM region (S20).

As described above with reference to FIG. 3, the table established with respect to the engine may be a table that is established with respect to a fixed load. Further, this table may be a table in which the control cycle of ETC, which minimizes an RPM error rate with respect to a corresponding engine RPM, is set.

The step S20 of driving the engine according to the control cycle of ETC set in the table may be a step of applying the control cycle of ETC, which is set in the table in accordance with the corresponding engine RPM.

In this process, the control cycle of ETC in the table, described above with reference to FIG. 3, may be applied.

Subsequently, a step of determining the range of variation in the RPM of the engine may be performed (S30). The determination of the range of variation in the RPM of the engine may be performed periodically. For example, this determination may be performed every second.

At this time, a manifold absolute pressure (MAP) of the engine is also determined together with the range of variation in the RPM of the engine.

Subsequently, the control cycle of ETC is adjusted based on the result of the determination (S40). That is, the engine is controlled by changing the control cycle of ETC based on the result of the determination of the range of variation in the RPM of the engine and the MAP.

The step S40 of adjusting the control cycle of ETC may be performed differently depending on whether the range of variation in the RPM of the engine is, based on a target value, a first range (S32), a second range (S33), a third range (S31), or a fourth range (S34).

For example, when the range of variation in the RPM of the engine is the first range based on the target value (S32), the control cycle of ETC may be lengthened by a first time period (S41).

When the range of variation in the RPM of the engine is the second range (S33), which is wider than the first range, the control cycle of ETC may be lengthened by a second time period (S42), which is shorter than the first time period.

Depending on the circumstances, the above steps of lengthening the control cycle of ETC may be performed as a single step. That is, when the range of variation is substantially from the first range to the second range, the control cycle of ETC may be lengthened by the first time period.

When the range of variation is the third range (S31), which is wider than the second range, the engine may be driven according to the control cycle of ETC set in the table. That is, in this case, the process goes back to the engine RPM tracking control step S10, and the control cycle of ETC in the table may be applied (S20).

When the range of variation is the fourth range (S34), which is wider than the third range, the control cycle of ETC may be shortened (S43).

Subsequently, a step of driving the engine 30 while controlling ETC according to the control cycle of ETC, set through the above process, may be performed (S50).

The control cycle of ETC may be adjusted within the range from 700 ms to 1200 ms.

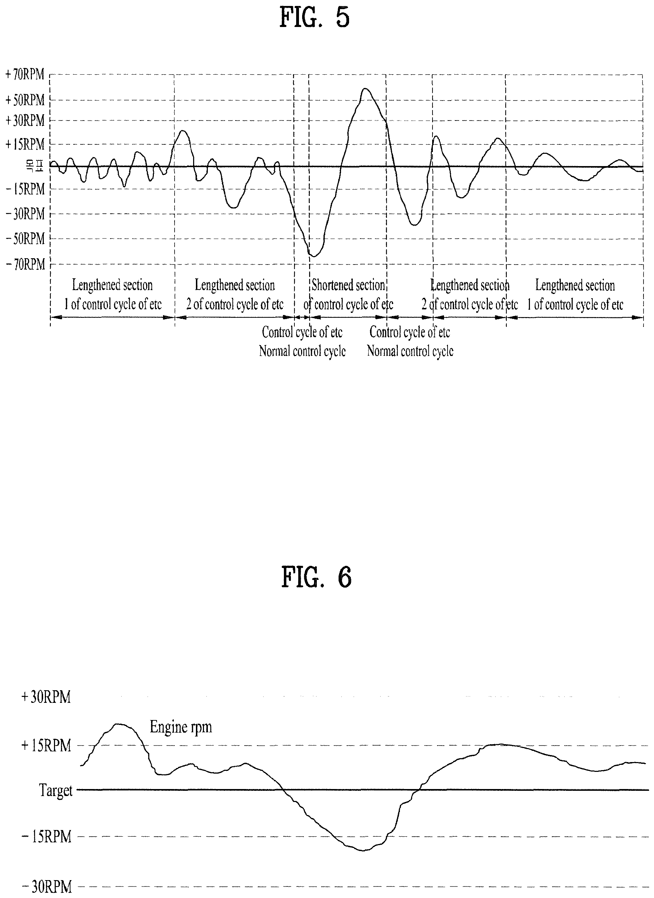

FIG. 5 is a graph showing the process of driving the engine while changing the control cycle of ETC depending on the engine RPM according to an embodiment of the present invention.

For example, in terms of the range of variation in the RPM of the engine, the first range may be less than ±15 RPM, the second range may be ±15 RPM or greater and less than ±30 RPM, the third range may be ±30 RPM or greater and less than ±50 RPM, and the fourth range may be ±50 RPM or greater.

Under the conditions of the above set concrete values of the range of variation in the RPM of the engine, when the range of variation is the first range, i.e. less than ±15 RPM based on the target value (S32), the control cycle of ETC may be lengthened by 200 ms (lengthened section 1) (S41). When the range of variation is the second range, i.e. ±15 RPM or greater and less than ±30 RPM based on the target value (S33), the control cycle of ETC may be lengthened by 100 ms (lengthened section 2) (S42).

The first range, which is less than ±15 RPM, may be the state in which the engine is stable with respect to the load. Because the engine RPM may readily vary within the range of ±15 RPM depending on the control state of ETC, the density of the fuel-air mixture, the pressure distribution in the cylinder, etc., the first range may be recognized as being the state in which the engine is stable with respect to the load.

The second range, which is ±15 RPM or greater and less than ±30 RPM, may be the state in which the engine RPM is slightly unstable and is about to enter the stable state. However, depending on the driving conditions and circumstances, the engine RPM may enter the stable state or may enter the unstable state. Therefore, when the range of variation in the RPM of the engine corresponds to the second range, i.e. is ±15 RPM or greater and less than ±30 RPM, the control cycle of ETC is lengthened by a predetermined time period, which is shorter than that in the first range, so that the engine RPM can enter the stable state.

The third range, which is ±30 RPM or greater and less than ±50 RPM, may be the state in which the engine is driven in a normal mode, to which the control cycle of ETC set in the aforementioned table is applied.

The fourth range, which is ±50 RPM or greater, may be the state in which the control cycle of ETC is shortened in order to rapidly track the target RPM. When the engine RPM is relatively low, the allowance rate with respect to the output of the engine is sufficient, and thus sudden variation in the RPM of the engine does not occur. However, when the engine RPM is relatively high, the allowance rate with respect to the output of the engine is not sufficient. When the range of variation in the RPM of the engine corresponds to the fourth range, i.e. is ±50 RPM or greater, due to abnormal combustion of the engine or load tracking, the control cycle of ETC is shortened in order to rapidly track the target RPM.

As described above, when the range of variation in the RPM of the engine is the first range, the control cycle of ETC may be adjusted by additionally determining whether the range of variation in the MAP is within 5 hPa.

That is, when the range of variation in the RPM of the engine is within 15 RPM (the first range) and/or the range of variation in the MAP is within 5 hPa, it is determined that the engine RPM has nearly approached the target RPM, and the control cycle of ETC is lengthened by 200 ms (S41), whereby the rise and the fall of the engine RPM are delayed.

When the range of variation in the RPM of the engine is the third range, i.e. ±30 RPM or greater and less than ±50 RPM based on the target value (S31), the control cycle of ETC set in the table may be applied (normal control) (S20). When the range of variation in the RPM of the engine is the fourth range, i.e. ±50 RPM or greater (S34), the control cycle of ETC may be shortened from 1000 ms to 700 ms (S43).

When the range of variation in the RPM of the engine is the second range, i.e. less than ±30 RPM (S33), it may be determined that the engine has entered a stable control region, and the control cycle of ETC may be lengthened by about 100 ms (S42).

When the range of variation in the RPM of the engine is ±50 RPM or greater based on the target value (S34), it may be determined that hunting of the engine occurs excessively, and the control cycle of ETC may be shortened to 700 ms, thereby enabling the engine to rapidly track the target RPM (S43).

When the range of variation in the RPM of the engine is ±30 RPM or greater and less than ±50 RPM (the third range) based on the target value (S31), the engine may be controlled based on the ETC control cycle table (S20).

FIG. 6 is a graph schematically showing the engine RPM when the engine is driven based on the variable control cycle of ETC applied thereto according to an embodiment of the present invention.

When compared with the graph in FIG. 2, the graph in FIG. 6 shows that the difference between the current engine RPM and the target RPM is relatively small, and accordingly, the target RPM tracking performance of the engine is greatly enhanced.

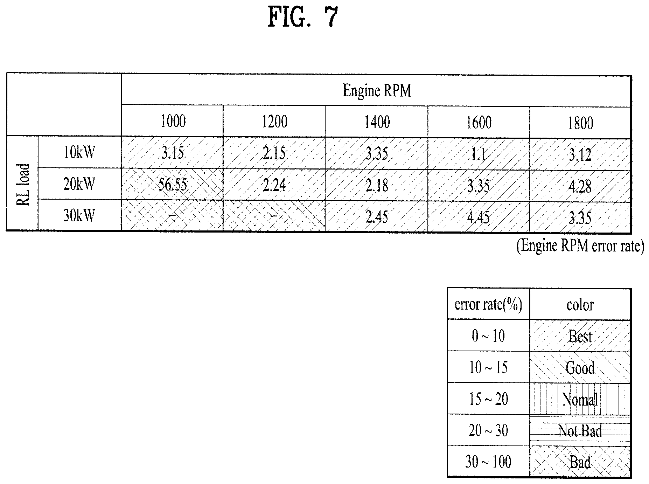

FIG. 7 is a table showing the error rate of the engine RPM in accordance with variation in the load when the embodiment of the present invention is applied.

The table in FIG. 7 shows the error rates of the engine RPM under the conditions in which the engine RPM is in the range from 1000 RPM to 1800 RPM and the values of an RL load are 10 kW, 20 kW and 30 kW.

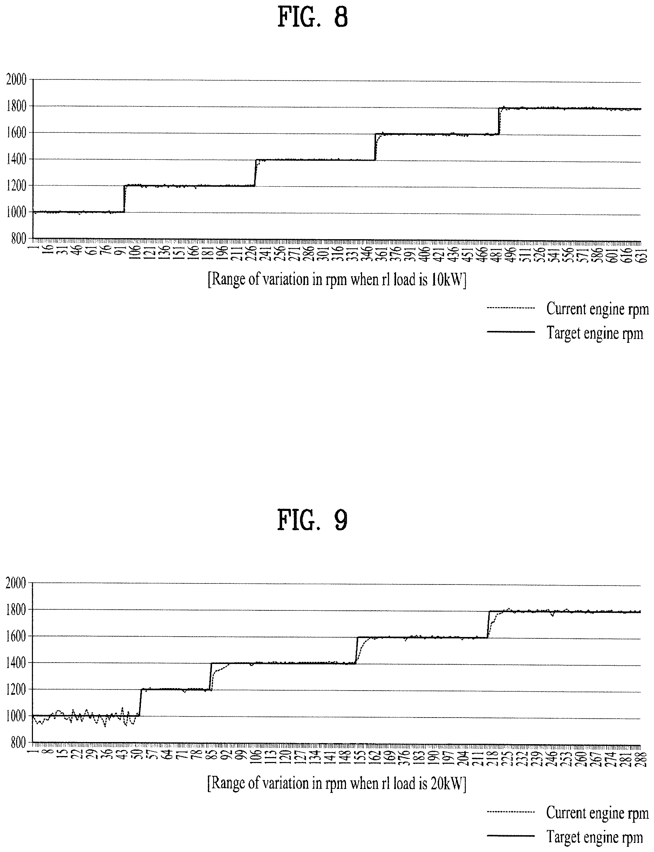

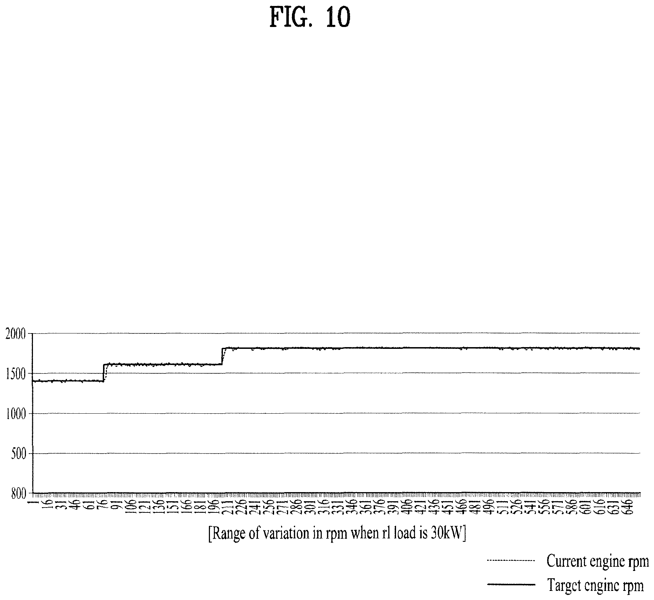

FIGs. 8, 9 and 10 are graphs showing the target RPM tracking performance when the values of the load are 10 kW, 20 kW and 30 kW, respectively. Further, the graphs in FIGs. 8, 9 and 10 show the target RPM tracking performance when the engine target RPM is increased in stages at intervals of 200 RPM.

The control cycle of ETC was adjusted according to the above-described method, and the error rates of the engine RPM in accordance with the adjusted control cycle of ETC were verified.

As shown in FIGs. 7 and 8, it can be verified that, when the load of 10 kW is applied, the maximum error rate of the engine RPM is 3.35 % and the minimum error rate of the engine RPM is 1.1 % in all of the engine RPM regions from 1000 RPM to 1800 RPM.

Referring to FIGs. 7, 9 and 10, it can be verified that, even when a load of 20 kW and a load of 30 kW are applied, the error rate of the engine RPM does not exceed 5 %. That is, it can be verified that excellent ("Best", refer to FIG. 7) performance is exhibited in most regions.

As such, it can be verified that the present invention is capable of optimizing the stability of the engine in accordance with variation in the RPM of the engine and variation in the load.

Referring to FIG. 7, when the load is 20 kW, the 1000 RPM region is unstable, and when the load is 30 kW, the regions from 1000 to 1200 RPM are unstable. However, these unstable regions are not problematic regions.

In other words, when the load is 10 kW, the engine is controlled so as to produce 10 kW of electric power, and thus the engine is driven in the range from 1300 to 1500 RPM in practice. When the load is 20 kW, the engine is driven in the range from 1500 to 1600 RPM in practice. When the load is 30 kW, the engine is driven in the range from 1700 to 1800 RPM in practice. As such, under high-load circumstances, the low engine RPM regions are not problematic regions.

Based on the variable control cycle of ETC, which is adjusted by the method according to the present invention, the target engine RPM tracking performance in the engine RPM stable region may be greatly enhanced. When this control method is applied to the engine generation system, stable power generation may be achieved, such that the error rate is less than 5 %.

When the cogeneration system, to which the present invention is applicable, is controlled at the maximum thermal efficiency, the temperature of the engine coolant becomes very low, and thus the load increases to a certain degree while the engine is driven. Further, mechanical friction increases due to decreases in the temperatures of the coolant and the oil.

The increase in mechanical friction changes the current operation characteristics of the engine, which has been stably driven. In this situation, a little hunting occurs. However, the present invention is capable of preventing this problem by driving the engine more stably.

In the step S30 of determining the range of variation in the RPM of the engine, variation in the RPM of the engine may occur due to variation in the load. For example, variation in the load that is applied to the engine may occur due to the change in the amount of power generation of the generator 40.

Hereinafter, a concrete example of optimizing the stability of the engine when variation in the load occurs according to the present invention will be described.

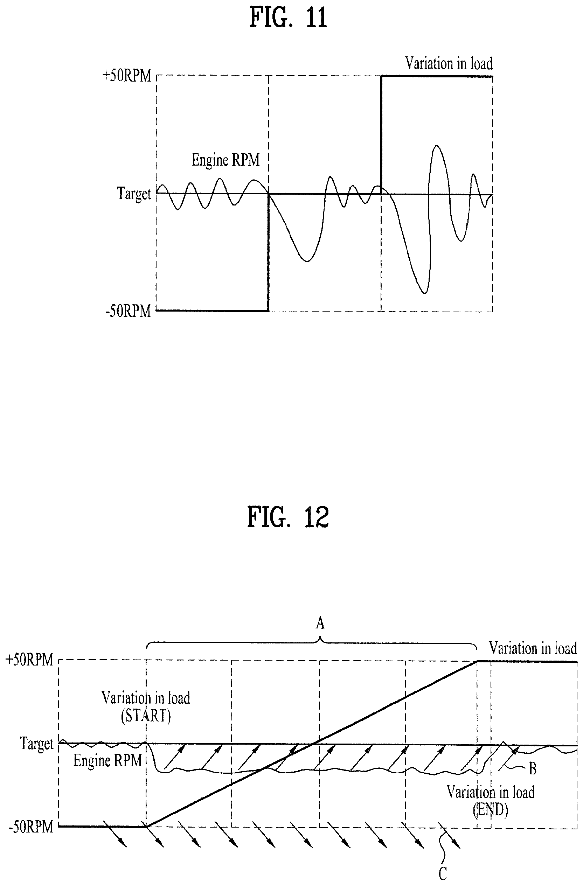

FIG. 11 is a graph showing variation in the RPM of the engine due to variation in the load in the engine generation system.

While the engine is driven in the engine generation system, the engine may not always be driven at a constant RPM due to incomplete combustion or the like. Further, in some cases, the engine may not be driven at a target RPM by variation in the load such as the generator. In order to prevent this problem, the engine RPM tracking control may be performed so that the engine can be driven at the target RPM.

The engine RPM tracking control is one of the controls that are essentially performed to drive the engine. A description of the engine RPM tracking control that is applied to the cogeneration system will now be made.

In the state in which the engine RPM normally tracks the target engine RPM due to the engine RPM tracking control, as shown in FIG. 11, when variation (increase or decrease) in the load occurs, the current engine RPM varies greatly according to variation in the load.

As shown in FIG. 11, when the load increases in stages, the engine RPM may fall sharply at the moment at which the load starts to increase.

At this time, engine control factors, such as ETC of the engine, a fuel valve, an ignition angle, etc., are controlled for load tracking, and intermittent hunting occurs during the load tracking.

If a high load is continually applied with a short cycle time to the engine, howling occurs during the target RPM tracking. If the control fails, there may occur a situation in which the engine stalls due to excessively high or low RPM.

If the load is applied when the engine RPM falls, the engine RPM may fall further, and if the load decreases when the engine RPM rises, the engine RPM may rise further. This phenomenon may have a negative influence on the reliability of the engine and the peripheral parts.

FIG. 12 is a view schematically showing a method of controlling the engine of the engine generation system according to another embodiment of the present invention. That is, FIG. 12 shows the method of controlling the engine of the engine generation system in accordance with variation in the load.

Because the engine is basically driven by combustion operation, RPM hunting (ripple) occurs even when the engine is controlled to be driven at a constant speed.

Therefore, when the load varies, it is impossible to immediately cope with variation in the load, which may cause a problem in which the engine RPM is sharply changed.

As shown in the graph in FIG. 11, when the load increases in the state in which the load and the engine RPM are constant, the engine RPM may fall due to a sudden increase in the load in the process of correcting the engine to a target RPM. Further, when the load decreases in the state in which the output of the engine is maintained constant, the engine RPM may rise due to an excessive increase in the output, attributable to a decrease in the load.

Referring to FIG. 12, in order to increase the output of the engine, control is performed such that the amount of air intake is increased in order to increase the output and the RPM of the engine. At this time, the output and the RPM of the engine have a rising inclination.

In this state, if the range of increase in the load is calculated and the load is applied to the generator, the output and the RPM of the engine have a falling inclination.

When the rising inclination due to the operation of the engine and the falling inclination due to the generator offset each other, the engine is driven at an RPM region that is slightly lower than the target RPM, but the engine RPM is very stable.

When the increase in the load is completed, this control is also completed. At this time, the target RPM tracking control is performed in accordance with the rising inclination of the engine so that the engine normally tracks the target RPM.

In the cogeneration system, to which the engine generation system of the present invention is applicable, because the power generation output varies depending on consumers' requests, many factors that cause variation in the load may be present. Therefore, there is a need for a method of stably controlling the engine.

When the engine RPM is lower than the target RPM, the engine has a rising inclination B in order to track the target RPM in the region A, in which the load varies.

When the load that is applied to the generator increases, the engine RPM falls, and an additional output is required. Therefore, the engine has a falling inclination C in this region A, in which the load varies.

When the rising inclination B and the falling inclination C offset each other, the engine is driven at a relatively low RPM region, but is controlled so as to stably cope with the increase in the load.

Conversely, when the load decreases, the engine has a falling inclination, but the generator causes a rising inclination. In this case, the engine is controlled to be driven in an RPM region that is higher than the target RPM.

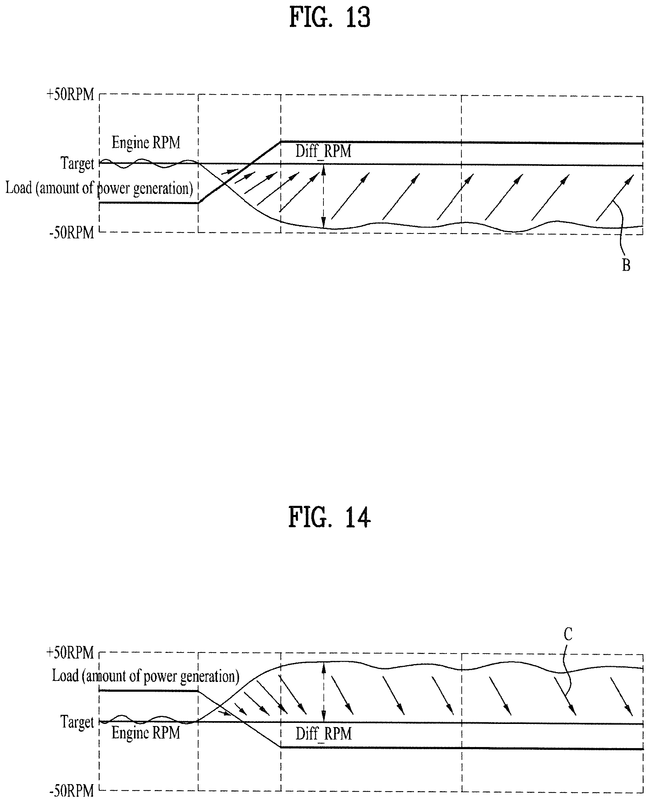

This control process is shown in the graph in FIG. 14, which has an appearance opposite that of the graph in FIG. 12.

This control process may be referred to as load variation control.

FIG. 13 is a graph schematically showing the method of controlling the engine of the engine generation system in accordance with an increase in the load according to the other embodiment of the present invention.

Referring to FIG. 13, according to the embodiment of the present invention, the engine may be controlled such that variation in the RPM of the engine Diff_RPM due to an increase in the load (the amount of power generation) is within a predetermined range.

When the engine RPM is lower than the target RPM, if the load applied to the generator increases, the engine RPM falls, and the engine RPM tracking has the rising inclination B in order to track the target RPM in the region in which the load varies.

Specifically, when variation in the RPM of the engine Diff_RPM occurs, the engine may be controlled such that the difference between variation in the RPM of the engine due to variation in the load and variation in the RPM of the engine for the engine RPM tracking is within a predetermined range (e.g. from 10 to 15 RPM).

At this time, the engine may be controlled such that the direction in which the engine RPM varies for the engine RPM tracking is opposite the direction in which the engine RPM varies due to variation in the load.

Variation in the RPM of the engine Diff_RPM may be a value that is derived by subtracting the current engine RPM from the target RPM (i.e. Diff_RPM = target RPM - current RPM).

Further, when the variation in the RPM of the engine Diff RPM is a predetermined level or greater, the engine may be controlled such that the difference between the variation in the RPM of the engine due to variation in the load and the variation in the RPM of the engine for the engine RPM tracking is within a predetermined range (e.g. from 10 to 15 RPM).

For example, when variation in the RPM of the engine Diff_RPM becomes greater than 15 RPM, the above-described control may be performed.

Variation in the load may be adjusted so that variation in the RPM of the engine due to variation in the load is within a predetermined range (e.g. 10 to 15 RPM). Variation in the load may be continuous-type variation having a constant inclination, rather than step-type variation.

FIG. 14 is a graph schematically showing the method of controlling the engine of the engine generation system in accordance with a decrease in the load according to the other embodiment of the present invention.

Referring to FIG. 14, according to the embodiment of the present invention, the engine may be controlled such that variation in the RPM of the engine Diff_RPM due to a decrease in the load (the amount of power generation) is within a predetermined range.

When the engine RPM is higher than the target RPM, if the load applied to the generator decreases, the engine RPM rises, and the engine RPM tracking has the falling inclination C in order to track the target RPM in the region in which the load varies.

Specifically, when variation in the RPM of the engine Diff_RPM occurs, the engine may be controlled such that the difference between variation in the RPM of the engine due to variation in the load and variation in the RPM of the engine for the engine RPM tracking is within a predetermined range (e.g. from 10 to 15 RPM).

At this time, the engine may be controlled such that the direction in which the engine RPM varies for the engine RPM tracking is opposite the direction in which the engine RPM varies due to variation in the load.

Further, when the variation in the RPM of the engine Diff_RPM is a predetermined level or greater, the engine may be controlled such that the difference between the variation in the RPM of the engine due to variation in the load and the variation in the RPM of the engine for the engine RPM tracking is within a predetermined range (e.g. from 10 to 15 RPM).

For example, when variation in the RPM of the engine Diff_RPM is 15 RPM or lower or is less than 15 RPM, the above-described control may be performed.

Variation in the load may be adjusted so that variation in the RPM of the engine due to variation in the load is within a predetermined range (e.g. 10 to 15 RPM). Variation in the load may be continuous-type variation having a constant inclination, rather than step-type variation.

This inclination may be an inclination at which the continuous-type increase in the load becomes equivalent to the increase in opening degree of the ETC valve due to variation in the RPM of the engine Diff_RPM.

Although it is illustrated in FIGs. 13 and 14 that the load varies sharply in order to clarify variation in the load and variation in the RPM of the engine Diff_RPM (i.e. the difference between the engine RPM and the target RPM), the load may vary gently in practice, as shown in FIG. 12.

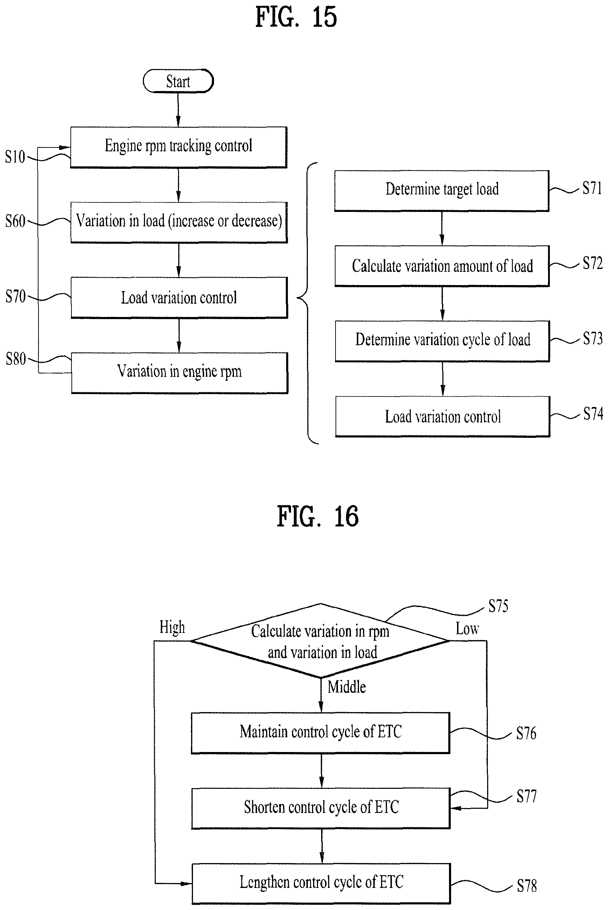

FIG. 15 is a flowchart showing the method of controlling the engine of the engine generation system according to the other embodiment of the present invention.

First, the engine RPM tracking control may be performed (S10). The engine RPM tracking control step S10 may be performed over the entire engine generation process.

As described above, in some cases, the engine may not always be driven at a target RPM for various reasons. In order to prevent this problem, the engine RPM tracking control step S10 may be performed so that the engine can be driven at the target RPM.

Subsequently, variation in the load may occur (S60). Variation in the load may include an increase or decrease in the load, which may correspond to an increase or decrease in the number of power consumers while the engine generation system is being driven. For example, variation in the load may correspond to start or end of the operation of an air-conditioning system.

As such, when variation in the load occurs (S60), the above-described load variation control may be performed (S70).

That is, when the load applied to the engine varies due to variation in the amount of power generation of the generator, the engine may be controlled such that the difference between variation in the RPM of the engine due to variation in the load and variation in the RPM of the engine for the engine RPM tracking is within a predetermined range and such that the direction in which the engine RPM varies for the engine RPM tracking is opposite the direction in which the engine RPM varies due to variation in the load.

At the same time, variation in the load may be adjusted such that variation in the RPM of the engine due to variation in the load is within a predetermined range.

The load variation control step S70 may be performed similarly to the step S30 of determining the range of variation in the RPM of the engine and the step S40 of controlling the control cycle of ETC based on the determination result, described above with reference to FIG. 4. Specifically, if the reason for variation in the RPM of the engine is variation in the load, the control process according to this embodiment may be applied.

The control process, described above with reference to FIG. 4, may be applied to the situation in which variation in the RPM of the engine is not caused by variation in the load but is caused by other general reasons. The control process according to this embodiment may be applied to the situation in which the concrete reason for variation in the RPM of the engine is variation in the load.

As shown in FIG. 15, the load variation control step S70 may include a step of determining a target load (S71), a step of calculating the variation amount of the load in accordance with the target load (S72), a step of determining a variation cycle of the load (S73), and a step of controlling the engine according to the variation amount and the variation cycle of the load (S74).

In the step S72 of calculating the variation amount of the load, the variation amount of the load may be a value that is derived by adding the decreased amount of the engine RPM to the increased amount of the MAP.

The increased amount of the MAP may be a value that is derived by subtracting the previous MAP value from the current MAP value every second, i.e. may be a value that is derived by subtracting the previous MAP value of 1 second beforehand from the current MAP value.

The decreased amount of the engine RPM may be a value that is derived by subtracting the current engine RPM from the previous engine RPM of 1 second beforehand.

The step of controlling the engine, i.e. the load variation control step S70, may be achieved by adjusting the cycle of the ETC.

FIG. 16 is a flowchart showing the process of controlling the control cycle of ETC according to the other embodiment of the present invention.

Referring to FIG. 16, the process of controlling the control cycle of ETC may include a step of calculating variation in the RPM of the engine and variation in the load based on the variation amount of the load calculated in the above-described load variation calculation step S72 (S75).

Subsequently, depending on the calculated variation amount of the load, the control cycle of ETC may be maintained (S76), may be shortened (S77), or may be lengthened (S78).

For example, if the current control cycle of ETC is 1000 ms, the control cycle of ETC may be shortened by 200 to 400 ms (S77) or may be lengthened by 100 to 200 ms (S78).

In the region in which variation in the load is started and the engine RPM is maintained constant, the control cycle of ETC may be shortened (S77).

In the region in which the load continually varies and the difference between the current engine RPM and the target RPM is maintained at a constant level, the control cycle of ETC may be maintained (S76).

In the region in which variation in the load is completed and the difference between the current engine RPM and the target RPM gradually decreases, the control cycle of ETC may be lengthened (S78).

Described in more detail, the control cycle of ETC may be controlled based on the following predetermined engine RPM variation regions depending on variation in the load.
1) Initial Stage of Control: the control cycle of ETC is shortened in the region in which variation in the load is started and the engine RPM is maintained constant, so that the engine RPM is stabilized in a short time period.
2) Middle Stage of Control: the control cycle of ETC is maintained in the region in which the load continually varies and variation in the RPM of the engine Diff_RPM is within a predetermined range, i.e. the difference between the current engine RPM and the target RPM is maintained constant.
3) Last Stage of Control: the control cycle of ETC is lengthened in the region in which variation in the load is completed and variation in the RPM of the engine Diff RPM gradually decreases to track the target RPM, so that the current engine RPM can track the target RPM without hunting of the RPM by lengthening the control cycle of ETC before the engine RPM finally converges.

In the control amount of ETC, in terms of the relationship between the target RPM and the current RPM, the larger the variation in the RPM of the engine Diff_RPM, the smaller the variation in the opening degree of the ETC valve. In the initial stage of control, because the variation in ETC is small, the control of shortening the control cycle of ETC needs to be performed so that the engine RPM is rapidly stabilized with respect to an increase in the load.

When the engine RPM is maintained constant and the load increases, the MAP value may continually increase in accordance with the increase in the load. This state corresponds to the middle stage of control, in which the control cycle of ETC is maintained so that the inclination due to the increase in the load and the inclination due to tracking toward the target RPM offset each other.

When the load increases, the engine RPM cannot but fall. The reason why the difference between the current engine RPM and the target RPM needs to be maintained within a constant range is to stabilize the engine RPM more effectively than the control using the ETC related to the engine RPM in order to stably track the target RPM.

If it is intended to control the difference between variation in the RPM of the engine due to variation in the load and variation in the RPM of the engine due to the engine RPM tracking so as to be maintained at a constant value, rather than within a constant range, using the above method, the engine RPM may periodically rise above and fall below the target RPM when the load varies, producing great vibration.

As described above, the control process according to the embodiment is performed such that the falling inclination due to the increase in the load, which is of a continuous type having a constant inclination and is applied to the engine, and the rising inclination due to the increase in the RPM of the engine and the increase in the opening degree of the ETC valve offset each other. At this time, the engine RPM may be maintained slightly lower than the target RPM, but it is possible to stably increase the load.

Therefore, the target RPM tracking performance of the engine may be slightly lowered, but it is possible to rapidly track the target load by stably increasing the load.

When the load increases, the engine RPM is maintained relatively low, and when the load decreases, the engine RPM is maintained relatively high. Accordingly, when the load varies, it is possible to rapidly and stably change the RPM and/or the power of the engine and to minimize hunting of the engine RPM.

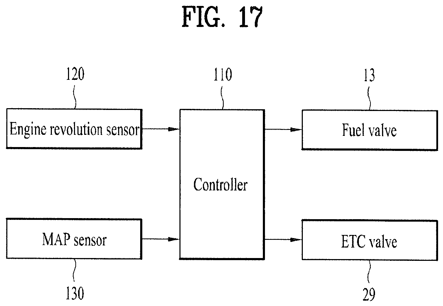

FIG. 17 is a block diagram schematically showing essential parts of the engine generation system to which the present invention is applicable.

Referring to FIGs. 1 and 17, the controller 110, which performs the above-described control process, controls the operation of the entire engine generation system, which includes the engine 30 and various sensors and valves.

The engine 30 may be provided with an engine RPM sensor 33 to measure the RPM of the engine 30.

The intake manifold 32 may be provided with a MAP sensor 35 for measuring an intake pressure, thereby calculating, in reverse, the magnitude of the load from the intake pressure of the fuel-air mixture that is introduced into the engine.

In general, the greater the introduced amount of fuel-air mixture, the greater the RPM of the engine and the larger the output, i.e. the larger the amount of power generation.

The fuel valve 13 may be provided at the inlet side of the mixer 16 in order to control the supplied amount of gas fuel that is to be mixed with air. The greater the supplied amount of gas fuel, the larger the fuel-to-air ratio of the fuel-air mixture.

The ETC valve 38 may be provided at the inlet side of the intake manifold 32 in order to control the amount of fuel-air mixture that is introduced into the engine. The greater the supplied amount of fuel-air mixture, the larger the output of the engine.

The controller 110 controls the operation of the engine 30 by controlling the opening degree of the fuel valve 13 and the opening degree of the ETC valve 38. The larger the opening degree of the fuel valve 13 and the opening degree of the ETC valve 38, the larger the RPM of the engine.

The controller 110 may be included in the power conversion system 90, or may be provided separately therefrom.

That is, the controller 110 may perform engine RPM tracking control for driving the engine at a target RPM, may drive the engine 30 in accordance with the control cycle of ETC, which is set in the table, in a no-load state, may determine the range of variation in the RPM of the engine, may adjust the control cycle of ETC according to the range of variation, and may drive the engine 30 according to the adjusted control cycle of ETC.

In addition, the controller 110 may adjust the control cycle of ETC in the range from 700 ms to 1200 ms. In addition, the controller 110 may repeatedly determine the range of variation in the RPM of the engine at intervals of a predetermined time period. Based on the result of determining the range of variation, the controller 110 may drive the engine 30 while adjusting and applying the control cycle of ETC through the above-described process.

## Claims

1. A method of controlling an engine (30) for driving a generator (40) in an engine generation system, the method comprising:
performing engine revolution-per-minute, RPM, tracking control (S10) so that the engine is driven at a target engine RPM;
driving the engine (S20) according to a control cycle of electronic throttle control, ETC, valve, set in a table in accordance with a corresponding engine RPM, when a load is in a fixed state;
determining a range of variation (S30) in the RPM of the engine and in a manifold absolute pressure, MAP, when variation in an RPM of the engine occurs;
adjusting the control cycle of ETC valve (S40) according to the range of variation in the RPM of the engine and in the MAP determined; and
driving the engine (S50) according to the adjusted control cycle of ETC valve.

2. The method according to claim 1, wherein the adjusting the control cycle of ETC (S40) comprises:
lengthening the control cycle of ETC valve (S41, S42) according to the range of variation.

3. The method according to claim 2, wherein the lengthening the control cycle of ETC comprises:
lengthening the control cycle of ETC valve by a first time period when the range of variation is a first range (S41); and
lengthening the control cycle of ETC valve by a second time period when the range of variation is a second range (S42),
wherein the second range is wider than the first range, and the second time period is shorter than the first time period.

4. The method according to claim 3,
wherein the control cycle of ETC valve is lengthened by the first time period when the range of variation is the first range and a range of variation in the MAP is within 5 hPa.

5. The method according to claim 3, or 4, wherein the engine (30) is driven according to the control cycle of ETC valve set in the table when the range of variation is a third range, the third range being wider than the second range.

6. The method according to claim 5, wherein the control cycle of ETC valve is shortened when the range of variation is a fourth range (S43), the fourth range being wider than the third range.

7. The method according to any one of claims 1 to 6, wherein the control cycle of ETC valve is adjusted in a range from 700 ms to 1200 ms.

8. The method according to claim 7, wherein the control cycle of ETC valve is adjusted at intervals of 100 ms.

9. The method according to claim 1, wherein, when variation in the RPM of the engine occurs due to variation in a load applied to the engine in response to variation in an amount of power generation of the generator, the adjusting the control cycle of ETC valve (S40) is performed such that a difference between variation in the RPM of the engine due to variation in the load and variation in the RPM of the engine for engine RPM tracking is within a predetermined range and such that a direction in which the RPM of the engine varies for the engine RPM tracking is opposite a direction in which the RPM of the engine varies due to variation in the load.

10. The method according to claim 9, wherein the adjusting the control cycle of ETC valve (S40) is performed according to a variation amount of the load and a variation cycle of the load when the load varies.

11. An engine generation system comprising:
a generator (40);
an engine (30) connected to a driving shaft of the generator to drive the generator (40); and
a controller (110) for controlling the engine (30),
wherein the controller (110) is configured to perform engine revolution-per-minute, RPM, tracking control so that the engine (30) is driven at a target engine RPM, to drive the engine according to a control cycle of electronic throttle control, ETC, valve, set in a table in accordance with a corresponding engine RPM, in a no-load state, to determine a range of variation in an RPM of the engine (30) and in a manifold absolute pressure, MAP, to adjust the control cycle of ETC valve according to the range of variation in the RPM of the engine and in the MAP determined, and to drive the engine (30)according to the adjusted control cycle of ETC valve.

12. The engine generation system according to claim 11, wherein the control cycle of ETC valve is adjusted in a range from 700 ms to 1200 ms.

13. The engine generation system according to claim 11, or 12, wherein, when variation in the RPM of the engine (30) occurs due to variation in a load applied to the engine (30) in response to variation in an amount of power generation of the generator (40), the controller (110) adjusts the control cycle of ETC valve such that a difference between variation in the RPM of the engine (30) due to variation in the load and variation in the RPM of the engine (30) for engine RPM tracking is within a predetermined range and such that a direction in which the RPM of the engine (30) varies for the engine RPM tracking is opposite a direction in which the RPM of the engine (30) varies due to variation in the load.

## Patentansprüche

1. Verfahren zur Steuerung eines Motors (30), um einen Generator (40) in einem Motorgeneratorsystem anzutreiben, wobei das Verfahren aufweist:
Durchführen einer Überwachungssteuerung einer Motorumdrehung pro Minute, RPM, (S10), so dass der Motor mit einer Zielmotor-RPM angetrieben wird;
Antreiben des Motors (S20) gemäß einem Steuerzyklus des elektronischen Drosselsteuer-, ETC-, Ventils, der in einer Tabelle gemäß einer entsprechenden Motor-RPM festgelegt ist, wenn eine Last in einem festen Zustand ist;
Bestimmen einer Schwankungsbreite (S30) in der RPM des Motors und in einem Krümmerabsolutdruck, MAP, wenn eine Schwankung in einer RPM des Motors auftritt;
Einstellen des Steuerzyklus des ETC-Ventils (S40) gemäß der Schwankungsbreite in der RPM des Motors und in dem bestimmten MAP; und
Antreiben des Motors (S50) gemäß dem eingestellten Steuerzyklus des ETC-Ventils.

2. Verfahren nach Anspruch 1, wobei das Einstellen des Steuerzyklus des ETC (S40) aufweist:
Verlängern des Steuerzyklus des ETC-Ventils (S41, S42) gemäß der Schwankungsbreite.

3. Verfahren nach Anspruch 2, wobei das Verlängern des Steuerzyklus der ETC aufweist:
Verlängern des Steuerzyklus des ETC-Ventils um eine erste Zeitspanne, wenn die Schwankungsbreite eine erste Breite ist (S41); und
Verlängern des Steuerzyklus des ETC-Ventils um eine zweite Zeitspanne, wenn die Schwankungsbreite eine zweite Breite ist (S42),
wobei die zweite Breite breiter als die erste Breite ist und die zweite Zeitspanne kürzer als die erste Zeitspanne ist.

4. Verfahren nach Anspruch 3,
wobei der Steuerzyklus des ETC-Ventils um die erste Zeitspanne verlängert wird, wenn die Schwankungsbreite die erste Breite ist und eine Schwankungsbreite des MAP innerhalb 5hPa liegt.

5. Verfahren nach Anspruch 3 oder 4, wobei der Motor (30) gemäß dem Steuerzyklus des ETC-Ventils, der in der Tabelle festgelegt ist, wenn die Schwankungsbreite eine dritte Breite ist, angetrieben wird, wobei die dritte Breite breiter als die zweite Breite ist.

6. Verfahren nach Anspruch 5, wobei der Steuerzyklus des ETC-Ventils verkürzt wird, wenn die Schwankungsbreite eine vierte Breite ist (S43), wobei die vierte Breite breiter als die dritte Breite ist.

7. Verfahren nach einem der Ansprüche 1 bis 6, wobei der zweite Steuerzyklus des ETC-Ventils in einem Bereich von 700 ms bis 1200 ms eingestellt wird.

8. Verfahren nach Anspruch 7, wobei der Steuerzyklus des ETC-Ventils in Intervallen von 100 ms eingestellt wird.

9. Verfahren nach Anspruch 1, wobei, wenn die Schwankung in der RPM des Motors aufgrund einer Schwankung in einer auf den Motor angewendeten Last ansprechend auf eine Schwankung in einer Leistungserzeugungsmenge des Generators auftritt, das Einstellen des Steuerzyklus des ETC-Ventils (S40) durchgeführt wird, so dass eine Differenz zwischen der Schwankung in der RPM des Motors aufgrund der Schwankung in der Last und der Schwankung in der RPM des Motors für die Motor-RPM-Überwachung innerhalb eines vorgegebenen Bereichs ist und so dass eine Richtung, in der die RPM des Motors schwankt, für die RPM-Überwachung entgegengesetzt zu einer Richtung ist, in der die RMP des Motors aufgrund der Schwankung in der Last schwankt.

10. Verfahren nach Anspruch 9, wobei das Einstellen des Steuerzyklus des ETC-Ventils (S40) gemäß einer Schwankungsgröße der Last und einem Schwankungszyklus der Last durchgeführt wird, wenn die Last schwankt.

11. Motorgeneratorsystem, das aufweist:
einen Generator (40);
einen Motor (30), der mit einer Antriebswelle des Generators verbunden ist, um den Generator (40) anzutreiben; und
eine Steuerung (110) zum Steuern des Motors (30),
wobei die Steuerung (110) konfiguriert ist, um eine Überwachungssteuerung einer Motorumdrehung pro Minute, RPM, durchzuführen, so dass der Motor (30) mit einer Zielmotor-RPM angetrieben wird, um den Motor gemäß einem Steuerzyklus des elektronischen Drosselsteuer-, ETC-, Ventils, der in einer Tabelle gemäß einer entsprechenden Motor-RPM festgelegt ist, in einem lastfreien Zustand anzutreiben, um eine Schwankungsbreite in einer RPM des Motors (30) und in dem bestimmten Krümmerabsolutdruck, MAP, zu bestimmen, und den Steuerzyklus des ETC-Ventils gemäß der Schwankungsbreite in der RPM des Motors und in dem bestimmten MAP einzustellen; und
um den Motor (30) gemäß dem eingestellten Steuerzyklus des ETC-Ventils anzutreiben.

12. Motorgeneratorsystem nach Anspruch 11, wobei der Steuerzyklus des ETC-Ventils in einem Bereich von 700 ms bis 1200 ms eingestellt wird.

13. Motorgeneratorsystem nach Anspruch 11 oder 12, wobei, wenn die Schwankung in der RPM des Motors (30) aufgrund einer Schwankung in einer auf den Motor (30) angewendeten Last ansprechend auf eine Schwankung in einer Leistungserzeugungsmenge des Generators (40) auftritt, die Steuerung (110) den Steuerzyklus des ETC-Ventils derart einstellt, dass eine Differenz zwischen der Schwankung in der RPM des Motors (30) aufgrund der Schwankung in der Last und der Schwankung in der RPM des Motors (30) für die Motor-RPM-Überwachung innerhalb eines vorgegebenen Bereichs ist und so dass eine Richtung, in der die RPM des Motors (30) schwankt, für die RPM-Überwachung entgegengesetzt zu einer Richtung ist, in der die RMP des Motors (30) aufgrund der Schwankung in der Last schwankt.

## Revendications

1. Procédé de commande d'un moteur (30) pour entraîner une génératrice (40) dans un système de groupe électrogène, le procédé comprenant :
la réalisation d'une commande de suivi de régime, TR/MIN, moteur (S 10) de sorte que le moteur soit entraîné à un régime moteur cible ;
l'entraînement du moteur (S20) selon un cycle de commande de soupape de commande électronique des gaz, ETC, établi dans une table en conformité avec un régime moteur correspondant, lorsqu'une charge est dans un état fixe ;
la détermination d'une plage de variation (S30) du régime du moteur et d'une pression absolue de la tubulure d'admission, MAP, lorsqu'une variation du régime du moteur se produit ;
l'ajustement du cycle de commande de soupape ETC (S40) selon la plage de variation déterminée du régime du moteur et de la MAP ; et
l'entraînement du moteur (S50) selon le cycle de commande ajusté de soupape ETC.

2. Procédé selon la revendication 1, dans lequel l'ajustement du cycle de commande d'ETC (S40) comprend :
l'allongement du cycle de commande de soupape ETC (S41, S42) selon la plage de variation.

3. Procédé selon la revendication 2, dans lequel l'allongement du cycle de commande d'ETC comprend :
l'allongement du cycle de commande de soupape ETC d'une première période lorsque la plage de variation est une première plage (S41) ; et
l'allongement du cycle de commande de soupape ETC d'une seconde période lorsque la plage de variation est une deuxième plage (S42),
dans lequel la deuxième plage est plus large que la première plage, et la seconde période est plus courte que la première période.

4. Procédé selon la revendication 3,
dans lequel le cycle de commande de soupape ETC est allongé de la première période lorsque la plage de variation est la première plage et une plage de variation de la MAP est dans les limites de 5 hPa.

5. Procédé selon la revendication 3 ou 4, dans lequel le moteur (30) est entraîné selon le cycle de commande de soupape ETC établi dans la table lorsque la plage de variation est une troisième plage, la troisième plage étant plus large que la deuxième plage.

6. Procédé selon la revendication 5, dans lequel le cycle de commande de soupape ETC est raccourci lorsque la plage de variation est une quatrième plage (S43), la quatrième plage étant plus large que la troisième plage.

7. Procédé selon l'une quelconque des revendications 1 à 6, dans lequel le cycle de commande de soupape ETC est ajusté dans une plage de 700 ms à 1200 ms.

8. Procédé selon la revendication 7, dans lequel le cycle de commande de soupape ETC est ajusté à des intervalles de 100 ms.

9. Procédé selon la revendication 1, dans lequel, lorsqu'une variation du régime du moteur se produit en raison d'une variation d'une charge appliquée au moteur en réponse à une variation d'une quantité de génération de puissance de la génératrice, l'ajustement du cycle de commande de soupape ETC (S40) est réalisé de sorte qu'une différence entre une variation du régime du moteur en raison d'une variation de la charge et une variation du régime du moteur pour un suivi de régime moteur soit dans une plage prédéterminée et de sorte qu'une direction dans laquelle le régime du moteur varie pour le suivi de régime moteur soit opposée à une direction dans laquelle le régime du moteur varie en raison d'une variation de la charge.

10. Procédé selon la revendication 9, dans lequel l'ajustement du cycle de commande de soupape ETC (S40) est réalisé selon une quantité de variation de la charge et un cycle de variation de la charge lorsque la charge varie.

11. Système de groupe électrogène comprenant :
une génératrice (40) ;
un moteur (30) raccordé à un arbre d'entraînement de la génératrice pour entraîner la génératrice (40) ; et
un dispositif de commande (110) pour commander le moteur (30),
dans lequel le dispositif de commande (110) est configuré pour réaliser une commande de suivi de régime, TR/MIN, moteur, de sorte que le moteur (30) soit entraîné à un régime moteur cible, pour entraîner le moteur selon un cycle de commande de soupape de commande électronique des gaz, ETC, établi dans une table en conformité avec un régime moteur correspondant, dans un état de non-charge, pour déterminer une plage de variation du régime du moteur (30) et d'une pression absolue de la tubulure d'admission, MAP, pour ajuster le cycle de commande de soupape ETC selon la plage de variation déterminée du régime du moteur et de la MAP,
et pour entraîner le moteur (30) selon le cycle de commande ajusté de soupape ETC.

12. Système de groupe électrogène selon la revendication 11, dans lequel le cycle de commande de soupape ETC est ajusté dans une plage de 700 ms à 1200 ms.

13. Système de groupe électrogène selon la revendication 11 ou 12, dans lequel, lorsqu'une variation du régime du moteur (30) se produit en raison d'une variation d'une charge appliquée au moteur (30) en réponse à une variation d'une quantité de génération de puissance de la génératrice (40), le dispositif de commande (110) ajuste le cycle de commande de soupape ETC de sorte qu'une différence entre une variation du régime du moteur (30) en raison d'une variation de la charge et une variation du régime du moteur (30) pour un suivi de régime moteur soit dans une plage prédéterminée et de sorte qu'une direction dans laquelle le régime du moteur (30) varie pour le suivi de régime moteur soit opposée à une direction dans laquelle le régime du moteur (30) varie en raison d'une variation de la charge.
